# EUROPÄISCHE PATENTSCHRIFT

(11) **EP 0 431 222 B1**
(45) Veröffentlichungstag und Bekanntmachung des Hinweises auf die Patenterteilung: **27.04.1994**
(21) Anmeldenummer: 89312637.5
(22) Anmeldetag: 04.12.1989
(51) Int. Cl.: G01F 15/14, G01F 15/18

(54) **Gasverbrauchsmesseinrichtung**
Apparatus for measuring gaz consumption
Compteur de consommation de gaz

(43) Veröffentlichungstag der Anmeldung: 12.06.1991
(73) Patentinhaber: SIEMENS AKTIENGESELLSCHAFT, 80333 München (DE); SIEMENS MEASUREMENTS LIMITED, Lancashire OL9 7JS (GB)
(72) Erfinder: Spendel, Karl Damian, Dr., D-8500 Nürnberg 50 (DE)

(56) Entgegenhaltungen:
- EP-A- 0 243 294
- EP-A- 0 303 255
- CA-A- 991 441
- DE-A- 1 698 463
- DE-C- 612 278
- DE-C- 803 492
- GB-A- 2 215 758

## Beschreibung

Die Erfindung betrifft eine Gasverbrauchsmeßeinrichtung nach dem Oberbegriff des Patentanspruchs 1.

Gasverbrauchsmeßeinrichtungen der vorbeschriebenen Art für Endverbraucher bestehen üblicherweise aus einem gasdicht verschlossenen, mit einem Eintrittsrohr und einem Austrittsrohr versehenen Kessel, der einen Durchflußmengenmesser mit Anzeigevorrichtung enthält. In der Versorgungsleitung zur Meßeinrichtung ist ein Absperrventil angeordnet, mit dem die Gaszufuhr im Bedarfsfall gesperrt werden kann. Erforderlichenfalls kann zusätzlich zum Absperrventil ein Druckregler in die Zuleitung eingefügt werden.

Aus der DE-PS 803 492 ist auch bereits eine Nebenzähler-Einrichtung für Gas bekannt, bei der ein Durchflußmengenmesser (Gaszähler) mit einem Absperrventil kombiniert ist und mit diesem eine Einheit bildet. Darüber hinaus ist aus der DE-AS 16 98 463 ein Gas-Verbrauchsmesser bekannt, bei dem ein Durchflußmengenmesser (Gas-Verbrauchsmesser) mit einem Druckregler in einem gemeinsamen Gehäuse untergebracht ist.

Diesen bekannten Einrichtungen ist der Nachteil gemeinsam, daß bei deren Installation in eine vorhandene Gasanlage mehr oder weniger umfangreiche Installationsarbeiten mit entsprechendem Kostenaufwand erforderlich sind. So kann beispielsweise der Fall eintreten, daß in einer vorhandenen Gasanlage bereits ein Absperrventil vorhanden ist, aber ein Durchflußmengenmesser und ein Druckregler installiert werden müssen. Dazu ist es erforderlich, daß entweder die beiden Elemente jedes für sich in die Anlage eingebaut werden oder beispielsweise eine Anordnung verwendet wird, wie sie aus der DE-AS 16 98 463 bekannt ist. Ähnlich verhält es sich etwa bei einer Anlage mit vorhandenem Druckregler und neu zu installierendem Durchflußmengenmesser mit Absperrventil. Entweder ist dabei der Montageaufwand relativ hoch oder es müssen für jeden dieser Fälle spezielle und daher kostspielige Gerätekombinationen bereitgestellt werden.

Der Erfindung liegt die Aufgabe zugrunde, bei Neu- oder Nachinstallationen von Gasanlagen den erforderlichen Installationsaufwand gegenüber dem bisherigen Zustand deutlich zu verringern und gleichzeitig eine flexibel an vorhandene Installationen anpaßbare einheitliche und daher preiswerte Einrichtung zu schaffen, die sich mit wenigen Handgriffen an die jeweiligen speziellen Anforderungen anpassen läßt.

Zur Lösung dieser Aufgabe wird die im Patentanspruch 1 angegebene Gasverbrauchsmeßeinrichtung vorgeschlagen. Dadurch ist erreicht, daß die neben dem Durchflußmengenmesser noch erforderlichen Bauelemente, wie Absperrventil und Druckregler, in einem gemeinsamen Gehäuse kompakt untergebracht werden können und gleichzeitig durch die modulare Gestaltung dieser Bauelemente die Gesamtanordnung mit geringstem Arbeitsaufwand flexibel an die jeweiligen örtlichen Verhältnisse angepaßt werden kann. Darüber hinaus ist erreicht, daß sich die Meßeinrichtung trotz ihrer funktionalen Flexibilität in einem einheitlichen kompakten Gehäuse unterbringen läßt, so daß die Installationsarbeiten wegen des stets gleichbleibenden Raumbedarfs exakt vorgeplant und mit minimalem Aufwand durchgeführt werden können. Auch der Raumbedarf für die Lagerhaltung der unterschiedlichen Elemente reduziert sich auf ein Miminum. Die Anpassung an die jeweiligen Erfordernisse kann sowohl an Ort und Stelle mit wenigen Handgriffen als auch zentral bei entsprechender Vorplanung durchgeführt werden.

In einer Weiterbildung der Erfindung gemäß Patentanspruch 2 ist ein Durchflußmengenmesser nach dem Ultraschall-Laufzeitprinzip verwendet, wie er etwa aus der EP-A-0 303 255 an sich bekannt ist. Ein solcher Ultraschall-Durchflußmengenmesser ist sehr kompakt und läßt sich daher besonders gut mit den übrigen Bauelementen in einem einzigen Gehäuse raumsparend kombinieren.

Durch die weitere besonders vorteilhafte Ausbildung gemäß Patentanspruch 3 ist erreicht, daß sich die Meßeinrichtung mit minimalem Installationsaufwand in eine vorhandene Leitungsführung einfügen läßt.

Durch die Anordnung der Gaseintritts- und Gasaustrittsöffnungen der Basismodule gemäß der weiteren Ausbildung nach Patentanspruch 4 ist vermieden, daß das Gas innerhalb des Moduls von der Gaseintrittsöffnung über den Wandspalt unmittelbar in die Gasaustrittsöffnung gelangen kann.

Weitere Einzelheiten der Erfindung werden anhand eines Ausführungsbeispiels im folgenden näher erläutert. Darin zeigen:
- Fig. 1: die erfindungsgemäß modular aufgebaute Gasverbrauchsmeßeinrichtung in einer räumlichen Übersichtsdarstellung;
- Fig. 2: die Prinzipdarstellung eines modular gestalteten Absperrventils;
- Fig. 3: ein anstelle des Absperrventils eingesetztes Blindmodul;
- Fig. 4: einen modular gestalteten Gasdruckregler als Prinzipdarstellung, und
- Fig. 5: ein anstelle des Gasdruckreglers eingesetztes Blindmodul.

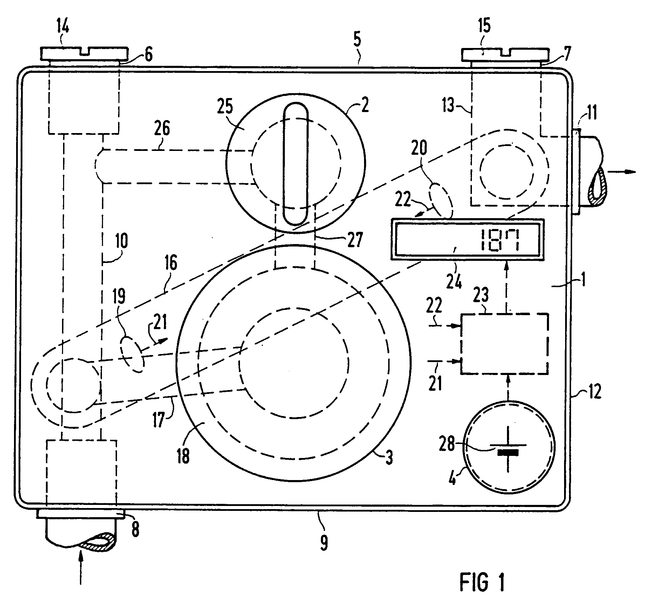

Die in Fig. 1 dargestellte modular aufgebaute Gasverbrauchsmeßeinrichtung besitzt ein Gehäuse 1, welches mit einer ersten frontalen Einschuböffnung 2 für die Aufnahme eines Absperrventils, einer zweiten frontalen Einschuböffnung 3 für die Aufnahme eines Druckreglers sowie einer dritten frontalen Einschuböffnung 4 für die Unterbringung einer elektrischen Speisestromquelle versehen ist. Außerdem besitzt das Gehäuse 1 an seiner Oberseite 5 eine erste verschließbare Gaseinlaßöffnung 6 und eine erste verschließbare Gasauslaßöffnung 7. Eine zweite verschließbare Gaseinlaßöffnung 8 mündet an der Unterseite 9 des Gehäuses 1 nach außen und ist über ein erstes Verbindungsrohr 10 mit der ersten Gaseinlaßöffnung 6 verbunden. Eine zweite verschließbare Gasauslaßöffnung 11 mündet durch die Seitenwand 12 des Gehäuses nach außen. Sie ist mit der ersten Gasauslaßöffnung 7 über ein abgewinkeltes Verbindungsrohr 13 verbunden. Es ist natürlich auch möglich, weitere miteinander verbundene Gaseinlaß- und Gasauslaßöffnungen nach Belieben anzuordnen, und bis auf die jeweils benutzten mit Hilfe von Schraubkappen 14, 15 gasdicht zu verschließen und zu plombieren. Die nicht verschlossenen Öffnungen 8, 11 können auf nicht dargestellte Weise an die Gaszuleitung bzw. die Gasableitung angeschlossen werden.

Im Innern des Gehäuses 1 ist rückseitig ein Ultraschall -Durchflußmengenmesser 16 diagonal angeordnet, der einlaßseitig über ein zweites Verbindungsrohr 17 mit dem Druckregler-Basismodul 18 und auslaßseitig mit dem abgewinkelten Verbindungsrohr 13 der Gasauslaßöffnungen 7, 11 verbunden ist. Der Ultraschall-Durchflußmengenmesser 16 besitzt zwei an den Enden seiner Meßstrecke angeordnete Ultraschall-Meßsensoren 19, 20, die über Verbindungsleitungen 21, 22 mit einer elektronischen Auswerteschaltung 23 verbunden sind, die ihrerseits an ein Anzeigedisplay 24 für die jeweils verbrauchte Gasmenge angeschlossen ist. Das Druckregler-Basismodul 18 ist über ein drittes Verbindungsrohr 26 mit dem Absperrventil-Basismodul 25 und dieses über ein viertes Verbindungsrohr 27 mit dem ersten Verbindungsrohr 10 gasleitend verbunden. Die elektronische Auswerteschaltung 23 wird von einer in der dritten frontalen Einschuböffnung 4 angeordneten Batterie 28 gespeist.

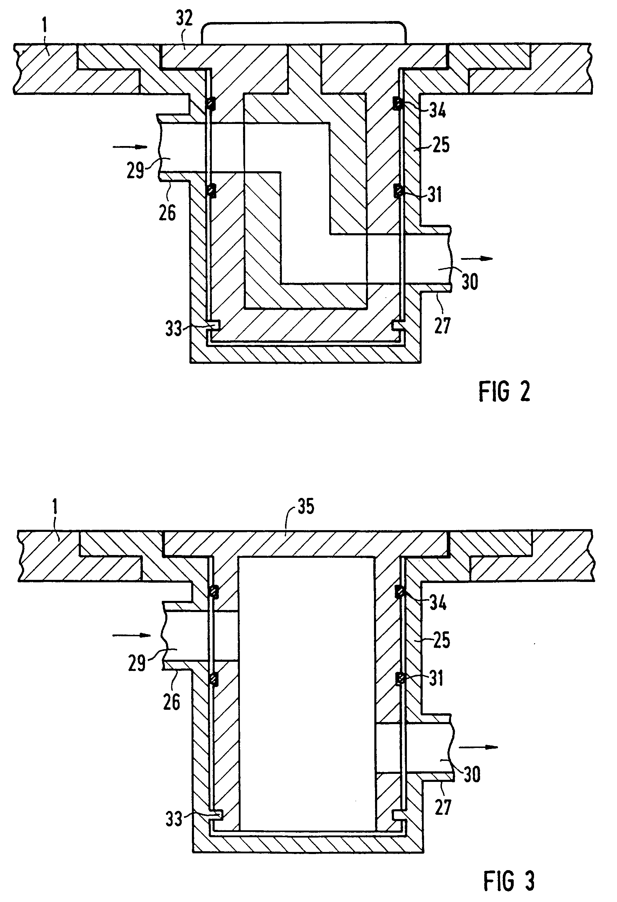

In Fig. 2 ist nun die erste frontale Einschuböffnung 2 mit dem Absperrschieber-Basismodul 25 und dem eingeführtem Absperrschieber-Funktionsmodul 32 in einem Längsschnitt schematisch dargestellt. Das Absperrschieber-Basismodul 25 ist ein becherförmiger Hohlzylinder, der mit einer ersten Gaseinlaßbohrung 29 und einer ersten Gasauslaßbohrung 30 in unterschiedlichen horizontalen Ebenen versehen ist. Zwischen den beiden Ebenen ist eine erste O-Ringdichtung 31 angeordnet, die verhindert, daß bei eingesetztem Absperrschieber-Funktionsmodul 32 zwischen Gaseinlaßbohrung 29 und Gasauslaßbohrung 30 eine gasleitende Kriechverbindung besteht. In die erste Gaseinlaßbohrung 29 ist das dritte Verbindungsrohr 26 und in die erste Gasauslaßbohrung 30 ist das vierte Verbindungsrohr 27 gasdicht eingelassen. Das Absperrschieber-Funktionsmodul 32 ist im Absperrschieber-Basismodul 25 mit Hilfe eines Bajonettverschlusses 33 lösbar befestigt. Das Absperrschieber-Funktionsmodul 32 ist in seiner Funktion bekannt und bedarf daher keiner näheren Erläuterung. Eine zweite O-Ringdichtung 34 zwischen der ersten Gaseinlaßbohrung 29 und der Oberkante des Absperrventil-Basismoduls sorgt für die Gasabdichtung nach außen.

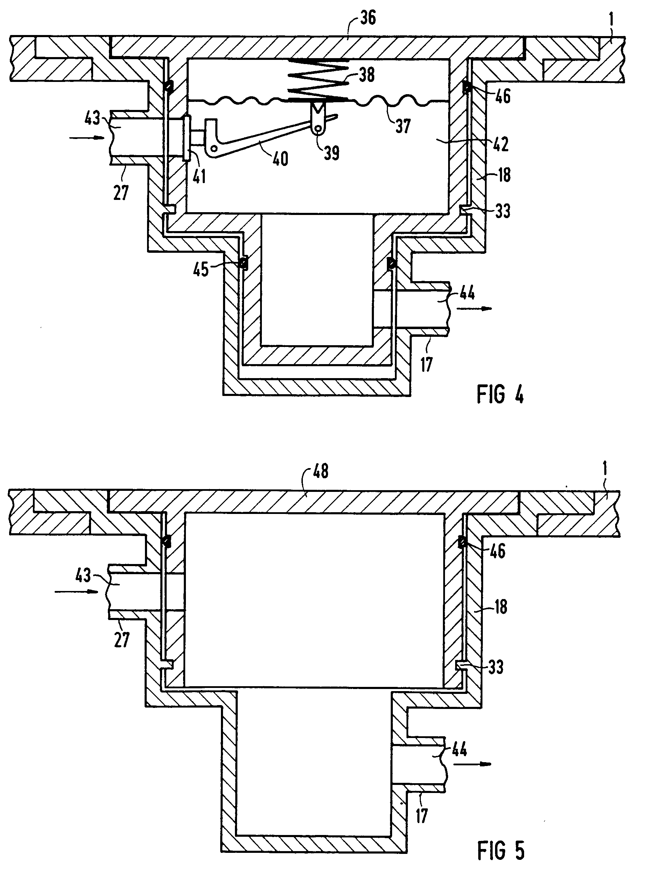

In Fig. 3 ist nun der Fall dargestellt, daß das Absperrschieber-Funktionsmodul 32 nicht benötigt wird. Dies ist dann der Fall, wenn bereits extern ein Absperrschieber vorhanden ist, der weiterbenutzt werden soll. In diesem Fall kann anstelle des Absperrschieber-Funktionsmoduls 32 ein Absperrschieber-Blindmodul 35 gleicher geometrischer Abmessung und gleicher äußerer Form sowie mit gleichen Gaseinlaß- und Gasauslaßbohrungen und in den gleichen horizontalen Ebenen angeordneten ersten und zweiten O-Ringdichtungen 31, 34 und schließlich mit dem gleichen Bajonettverschluß 33 in das Absperrschieber-Basismodul 25 eingeführt und befestigt werden. Auf diese Weise ist erreicht, daß die Gasverbrauchsmeßeinrichtung mit oder ohne Absperrschieber-Funktionsmodul benutzt werden kann, welches im Bedarfsfall durch ein wesentlich preisgünstigeres Blindmodul 35 ersetzt werden kann. Bei einer Modernisierung der Installation besteht dann jederzeit die Möglichkeit, das Blindmodul 35 gegen ein Funktionsmodul 32 auszutauschen. Das gleiche gilt für das in Fig. 4 dargestellte Druckregler-Funktionsmodul 36. Auch dieses ist im Prinzip bekannt. Es besteht aus einer Membran 37, die gegen eine Feder 38 arbeitet und über einen Betätigungsmechanismus 39 auf einen Drehhebel 40 wirkt, der über ein Ventil 41 den Gaseinlaß in Abhängigkeit von dem in der Druckkammer 42 herrschenden Druck regelt. Das Druckregler-Funktionsmodul ist in das Druckregler-Basismodul 18 in gleicher Weise mit Hilfe eines Bajonettverschlusses 33 eingesetzt und gehaltert wie das bereits beschriebene Absperrschieber-Funktionsmodul 32. Es besitzt eine zweite Gaseinlaßbohrung 43 und eine zweite Gasauslaßbohrung 44. Beide Bohrungen liegen in unterschiedlichen horizontalen Ebenen und sind durch eine dritte O-Ringdichtung 45 gasdicht voneinander getrennt. Eine vierte O-Ringdichtung 46 sorgt für die Gasabdichtung nach außen. Falls in einer vorhandenen Gasinstalation bereits ein Druckregler vorhanden ist, kann auch in diesem Fall, wie bereits beim Absperrschieber-Funktionsmodul beschrieben, anstelle des Druckregler-Funktionsmoduls 36 ein Druckregler-Blindmodul 48 mit ansonsten gleicher geometrischer Abmessung wie das Druckregler-Funktionsmodul 36 in das Druckregler-Basismodul 18 eingeführt und befestigt werden.

Durch die verschiedenen Möglichkeiten sowohl hinsichtlich des Anschlusses der Gasleitungen an den in unterschiedlichen Richtungen angeordnete Gaseinlaß- und Gasauslaßöffnungen, von denen die jeweils nicht benutzten auf einfache Weise mit Hilfe von Schraubkappen geschlossen werden können, und die weitere Möglichkeit der Anpassung an unterschiedliche Gasinstallationen durch Einfügen von Funktionsmodulen oder Blindmodulen ist die Meßeinrichtung mit großer Flexibilität und einfachen Mitteln an die örtlichen Gegebenheiten anpaßbar.

## Patentansprüche

1. Gasverbrauchsmeßeinrichtung mit einem in einem Gehäuse fest angeordneten Durchflußmengenmesser sowie mit einem Absperrventil und einem Druckregler, die gasleitend in Reihe miteinander und mit Anschlußöffnungen für den Gaseinlaß und den Gasauslaß verbunden sind, **dadurch gekennzeichnet,** daß der Durchflußmengenmesser, der Druckregler und das Absperrventil gemeinsam im Gehäuse (1) installiert sind und das Gehäuse frontseitig Einschuböffnungen (3, 4) für die Aufnahme des Absperrschiebers und des Druckreglers besitzt, die zweiteilig modular aufgebaut sind und aus je einem in die zugeordnete Einschuböffnung eingeführten und am Gehäuse befestigten Basismodul (18, 25) und je einem in dieses lösbar einsetzbaren, nach außen gasdicht fixierbaren und funktional mit dem Basismodul zusammenwirkenden Funktionsmodul (32, 36) bestehen, die mit je einer Gaseinlaß- und Gasauslaßsöffnung (29, 30, 43, 44) versehen sind, und daß jedem Funktionsmodul (32, 36) ein Blindmodul (35, 48) zugeordnet und anstelle des jeweiligen Funktionsmoduls in das zugeordnete Basismodul (18, 25) einsetzbar und nach außen gasdicht fixierbar ist.

2. Gasverbrauchsmeßeinrichtung nach Anspruch 1, **dadurch gekennzeichnet,** daß zur Gasmengenmessung ein Ultraschall-Durchflußmengenmesser (16) verwendet ist, dessen Stromversorgung aus einer im Gehäuse (1) auswechselbar angeordneten Batterie (28) erfolgt.

3. Gasverbrauchsmeßeinrichtung nach Anspruch 1 oder 2, **dadurch gekennzeichnet,** daß das Gehäuse (1) aus rechtwinkligen Wandelementen besteht, die mit einer Gruppe von Anschlußöffnungen (6, 8) für den Gaseinlaß und einer Gruppe von Anschlußöffnungen (7, 11) für den Gasauslaß versehen ist, die in unterschiedlichen vertikalen und horizontalen Richtungen münden, und die gruppenweise gasleitend miteinander verbunden und bis auf die jeweils benutzten Öffnungen gasdicht verschließbar sind.

4. Gasverbrauchsmeßeinrichtung nach Anspruch 1, 2 oder 3, **dadurch gekennzeichnet,** daß die Gaseinlaßöffnungen (29, 43) und Gasauslaßöffnungen (30, 44) der Basismodule (18, 25) auf unterschiedlichen Querschnittsebenen liegen und zwischen beiden Querschnittsebenen eine Ringdichtung (31, 45) angeordnet ist.

## Claims

1. Apparatus for measuring gas consumption with a flow-rate meter firmly arranged in a housing and with a stop valve and a pressure regulator, which are connected in a gas-conducting manner in series with one another and with attachment openings for the gas inlet and the gas outlet, characterized in that the flow-rate meter, the pressure regulator and the stop valve are installed together in the housing (1) and the housing has at the front, insert openings (3, 4) for receiving the stop slide and the pressure regulator which are assembled in two parts in a modular manner and comprise, in each case, a base module (18, 25) introduced into the associated insert opening and fastened to the housing and, in each case, a function module (32, 36) which can be releasably inserted into the base module, can be fixed in a gastight manner to the outside and cooperates functionally with the base module, which are provided, in each case, with a gas-inlet opening and a gas-outlet opening (29, 30, 43, 44), and in that a blind module (35, 48) is associated with each function module (32, 36) and can be inserted into the associated base module (18, 25) in place of the respective function module and can be fixed in a gastight manner to the outside.

2. Apparatus for measuring gas consumption according to claim 1, characterized in that an ultrasonic flow-rate meter (16) is used to measure the quantity of gas, the current supply of which meter comes from a battery (28) which is replaceably arranged in the housing (1).

3. Apparatus for measuring gas consumption according to claim 1 or 2, characterized in that the housing (1) consists of rectangular wall elements, which are provided with a group of attachment openings (6, 8) for the gas inlet and a group of attachment openings (7, 11) for the gas outlet, which open into different vertical and horizontal directions and which are connected to one another in groups in a gas-conducting manner and can be closed in a gastight manner, except for the respective openings being used.

4. Apparatus for measuring gas consumption according to claim 1, 2 or 3, characterized in that the gas inlet openings (29, 43) and gas outlet openings (30, 44) of the base modules (18, 25) lie on different cross-sectional planes and an annular seal (31, 45) is arranged between both cross-sectional planes.

## Revendications

1. Dispositif de mesure de la consommation de gaz comportant un débitmètre monté fixe dans un boîtier, ainsi qu'une vanne d'arrêt et un régulateur de pression, qui communiquent entre eux en série, de manière à véhiculer le gaz et à des ouvertures de raccordement pour l'entrée du gaz et pour la sortie du gaz, caractérisé par le fait que le débitmètre, le régulateur de pression et la vanne d'arrêt sont installés en commun dans le boitier (1) et que le boîtier possède frontalement des ouvertures d'insertion (3,4) de réception du tiroir d'arrêt et du régulateur de pression, qui sont formées, sous forme modulaire, en deux parties et qui sont constitués d'un module de base (18,25) inséré dans l'ouverture associée du tiroir et fixé sur le boîtier et d'un module fonctionnel (32,36), qui peut être inséré de façon amovible dans le module de base, qui peut être fixé d'une manière étanche au gaz vis-à-vis de l'extérieur et coopère fonctionnellement avec le module de base, le module de base et le module fonctionnel étant pourvus chacun d'une ouverture d'entrée du gaz et d'une ouverture de sortie du gaz (29,30,43,44), et qu'un faux module (35,48) est associé à chaque module fonctionnel (32,36) et peut être inséré, à la place du module fonctionnel respectif, dans le module de base associé (18,25) et peut être fixé d'une manière étanche au gaz vis-à-vis de l'extérieur.

2. Dispositif de mesure de la consommation de gaz suivant la revendication 1, caractérisé par le fait que pour la mesure du débit de gaz, on utilise un débitmètre à ultrasons (16), dont l'alimentation en courant électrique s'effectue à partir d'une pile (28) montée de façon interchangeable dans le boitier (1).

3. Dispositif de mesure de la consommation de gaz suivant la revendication 1 ou 2, caractérisé par le fait que le boîtier (1) est constitué par des éléments de paroi rectangulaires, qui sont pourvus d'un groupe d'ouvertures de raccordement (6, 8) pour l'entrée du gaz et d'un groupe d'ouvertures de raccordement (7,11) pour la sortie du gaz, ouvertures qui débouchent dans des directions verticale et horizontale différentes et qui communiquent entre elles, par groupe, avec passage du gaz, et qui peuvent être fermées d'une manière étanche au gaz, à l'exception des ouvertures utilisées.

4. Dispositif de mesure de la consommation de gaz suivant la revendication 1, 2 ou 3, caractérisé par le fait que les ouvertures (29,43) d'entrée du gaz et les ouvertures (30,44) de sortie du gaz des modules de base (18,25) sont situées dans des plans de coupe transversale différents et qu'une bague d'étanchéité annulaire (31,45) est disposée entre les deux plans de coupe transversale.
